# EUROPEAN PATENT APPLICATION

(11) **EP 1 469 632 A1**
(43) Date of publication of application: **20.10.2004**
(21) Application number: 03252450.6
(22) Date of filing: 17.04.2003
(51) Int. Cl.: H04L 9/06

(54) **Scrambling of digital information**

(71) Applicant: G-Mix Co., Ltd, Ageo-shi, Saitama (JP)
(72) Inventor: Suzuki, Toshi, Ageo-shi, Saitama (JP)
(74) Representative: Whitlock, Holly Elizabeth Ann

(57) **Abstract**

A method of preparing concealed information with a technique which does not substantially include mathematical control. Concealing processing information is produced by preparing information to be processed, diffusing the information to be processed with a spectrum pattern, and subjecting the spectrum spread information to be processed to phase modulation. The diffusion is performed by finding an EXOR of the information to be processed and the spread spectrum pattern.

## Description

### BACKGROUND OF THE INVENTION

### Field of the Invention

The present invention relates to a method of preparing concealed information from ordinary digital information (original information).

### Related Background Art

An encryption process serving as an existing concealing process is according to a key or an algorithm for encryption. Conventionally, the key or the algorithm includes a mathematical restriction and may be decrypted based upon the restriction. The present invention provides a method of preparing concealed information which does not substantially include such a mathematical restriction.

In an encryption technique which is put to practical use currently, a present situation is that information to be concealed of the technique has been devised with a character code (which is internationally standardized in that it is a symbol of meaning suitable for characteristics of electric communication means) as an object, and the encryption technique has been achieving technical progress (development). Further, a technical concealing process for the encryption technique is standardized in two systems consisting of an algorithm (arithmetic operation rule) and a parameter (key) for determining the number of arithmetic operations. Since a character code is an object of encryption, a process is adopted with which, with eight bits as a block, the information to be concealed is rotated with the number of bits regulated by an encryption standard thereof as a modulus, and an arithmetic operation of a parameter produced from key information is applied to the information to find an intermediate arithmetic operation result. This is a process of sequentially executing this arithmetic operation unit with respect to the number of steps determined by the number of bits of the key information to find an encrypted character code (cryptogram). Thus, if this is grasped as a relative meaning, it is only understood as a code conversion method peculiar to key information of eight-bit information. The key information is handled as a parameter for this arithmetic operation method (algorithm) . Therefore, if the key information is attacked by cutting out a draft text for every eight bits to find a code pattern (appearance frequency), it is likely to be decrypted by an outsider having several types of attacking methods which are currently being developed and commercialized.

### SUMMARY OF THE INVENTION

The present invention is not a code conversion process as described above. As a general technical content, the present invention is a format conversion according to bit resolution of block information (individual format conversion according to identification information [an ID code, a password, etc.]). Certainly, it can be understood easily that the number of development patterns of information exceeds the astronomical figures (exceeds 10 to the 100^{th} power) in an intermediate position (transfer time of approximately 2.3 milliseconds to 36 milliseconds/block at approximately 15 to 256 bytes and a transfer speed of 56K bits/second). This is on the basis of the fact that a value with which contents of one bit of information can be placed in a block is given by a factorial of a total number of bits of one block.

In the present invention, a novelty with respect to a simple mathematical theory as described above is that an address (numerical value representing an arrangement destination) with respect to a random bit arrangement for realizing the theory is mathematically secured by a combination with a generation method (maximum numerical value sequence generation method according to a slipping cylinder) without an accident. However, it is also an undeniable fact that only the format conversion of bit information is weak against a "linear attacking method" of the current encryption attacking method.

Thus, in the present invention, original information is concealed in a noise-like manner by processing of information to be concealed (executing an exclusive OR operation with sub-signal information) with a plurality of prime number patterns (result of an exclusive OR operation according to enumeration of each of 1 in the number of prime numbers and 0 in the number of prime numbers with respect to a block length of the bit information (aggregate number of bits), and then the above-described format conversion is executed. Concealing strength is secured by this combination of concealing processing.

In general, a mechanism for restoration processing (plane description processing) and a mechanism for concealing processing (encryption processing) are produced as two programs independently from each other. Consequently, an actual situation is that an area occupied by memories of the processing programs is relatively large. In the present invention, the concealing processing and the restoration processing are made executable with an identical program. For this purpose, a technique is adopted which executes the exclusive OR operation again according to the identical prime number pattern after the format conversion processing to complete objective concealed information.

This principle utilizes a characteristic of the exclusive OR operation that, when the exclusive OR operation is executed odd number of times according to identical information, calculated information returns to its original state.

Consequently, when the exclusive OR operation is applied to the information to be restored (concealed information) with the above-described prime number pattern information, information after the process is restored to be information immediately after the format conversion at the time of concealing processing. Thereafter, simply by designating an inverse table of a position designation address table (concealing vector table) which is used at the time of the concealing processing, inverse conversion (restoration) of a format becomes possible. Thereafter, when the exclusive OR operation is executed with the above-described prime number pattern information as an operand, the concealed information can be restored to be an original information block which is intended to be concealed. That is, a program capable of executing both the concealing processing and the restoration processing is completed only through exchange of vector tables with the identical program.

In the present invention, unlike the existing encryption technique, since identification information corresponds to an operand indirectly via a maximum numerical value sequence (a key directly corresponds to the operand in the encryption technique , a degree of freedom with respect to system design is increased at the time when specifications for each implementation of identification information are determined, and a strength against attack is guaranteed for practical design workers (opening of an identification information form).

In accordance with the present invention, concealing processing information is produced by preparing information to be processed, diffusing the information to be processed with a spectrum pattern, and subjecting the spectrum spread information to be processed to phase modulation. The diffusion is performed by finding an EXOR of the information to be processed and the spread spectrum pattern. In embodiments of the present invention, the information to be processed subjected to the phase modulation is further diffused by the spread spectrum pattern according to the EXOR, the spread spectrum pattern is prime number array data based upon a given prime number, and a conversion vector based upon the phase modulation is a numerical value data string (maximum numerical value array) which gives a position (address) in a block for transfer given by execution specifications generated by a slipping cylinder. The technique of the present invention is realized as a computer program.

### BRIEF DESCRIPTION OF THE DRAWINGS

In the accompanying drawings:
FIG. 1 shows basic processing for preparing concealed information;
FIG. 2 shows a conversion vector table for preparing concealed information and an inverse conversion vector table for restoring the concealed information;
FIG. 3 shows a client/server system providing a program for preparing concealed information;
FIG. 4 shows an example of a form of an element array of a spread spectrum pattern;
FIG. 5 shows an example of a compound arithmetic operation of element array data of a spread spectrum pattern;
FIG. 6 shows a relationship between information to be processed and processed information for description of a slipping cylinder maximum numerical value sequence generator;
FIG. 7 shows a structure of the slipping cylinder maximum numerical value sequence generator;
FIG. 8 shows a number array table to be allocated to each section of a cylinder of the slipping cylinder maximum numerical value sequence generator;
FIG. 9A shows an upper half of a state of a conversion vector to be outputted by the slipping cylinder maximum numerical value sequence generator; and
FIG. 9B shows a lower half of a state of the conversion vector to be outputted by the splitting cylinder maximum numerical value sequence generator.

### DESCRIPTION OF THE PREFERRED EMBODIMENTS

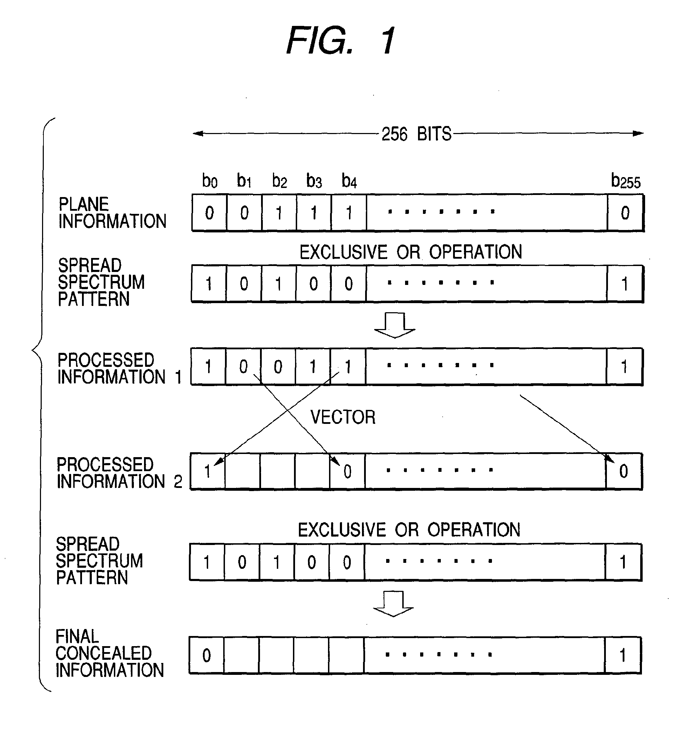

### Concealing processing (see FIG. 1)

Basic processing for preparing concealed information from ordinary digital information (original information - plane description information bit sequence) is as described below. FIG. 1 shows the case in which a plane description information bit sequence is subjected to concealing processing assuming, for example, that it is a block of a unit of 256 bits (b₀, b₁, ... b₂₅₅) .

Using a spread spectrum pattern bit array (block length determined by specifications) peculiar to a user which is given to the user who is a subscriber of this system, an original information block (b₀, b₁, ... bₘ: m is a maximum value of the block length) is subjected to spectrum spread processing of the exclusive OR operation in association with bits, and processed information 1 without a pattern (crest pattern) of information is produced. Phase modulation processing from processed information 1 to processed information 2, that is, processing for moving a position of each bit of a bit array (b₀, b₁, ...bₘ) of the processed information 1 to a certain position is performed. In this case, it is assumed that a bit bi existing in a bit position i of the processed information 1 (i is an arbitrary bit position of the processed information 1 within the block length) is moved to a position of the processed information i, for example, a position of j (a numerical value j given to the position of the address i by a rearrangement vector). In this case, it is determined, from the rearrangement vector table, to which bit position (address) of the processed information 2 the bit bi is moved. That is, a random number table gives a jth order to the bit bi as a moving destination address (i.e., rearrangement vector) in the processed information 2. For example, an address in 256 bits at the time when the block length is assumed to be 256 is given with eight bits, and a jth address, for example, a tenth address is 00001010 in the binary system (0A in the hexadecimal system, and 0033 in the quadruple system). Phase conversion (address conversion) from the processed information 1 to the processed information 2 is performed based upon a rearrangement vector indicating a moving destination address (vector) of each bit of 256 bits. This processed information 2 is subjected to the exclusive OR operation with the above-described peculiar spread spectrum pattern for simplification of restoration to be final concealed information.

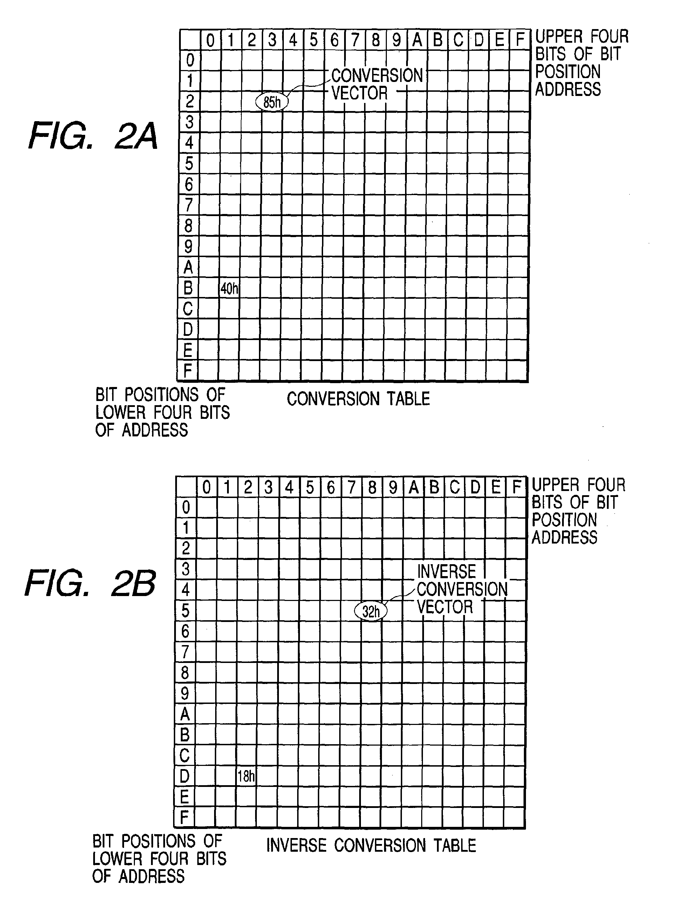

### Restoration processing (see FIG. 2)

The above-described inverse processing is performed in order to restore the final concealed information to be original information. The inverse processing of the exclusive OR operation is exclusive OR processing with a spread spectrum pattern peculiar to a user. Inverse processing of phase modulation is performed as described below. With reference to the conversion table of FIG. 2, it is assumed that a bit exiting in 32h (00110010) in the hexadecimal system of the above-described processed information 1 is moved to a bit position 85h (10001001) of the processed information 2 with an phase conversion vector 85h of the random number table. If an inverse conversion vector 32h is given to the bit position 85h in the inverse conversion table of FIG. 2, the bit can be returned to the original position.

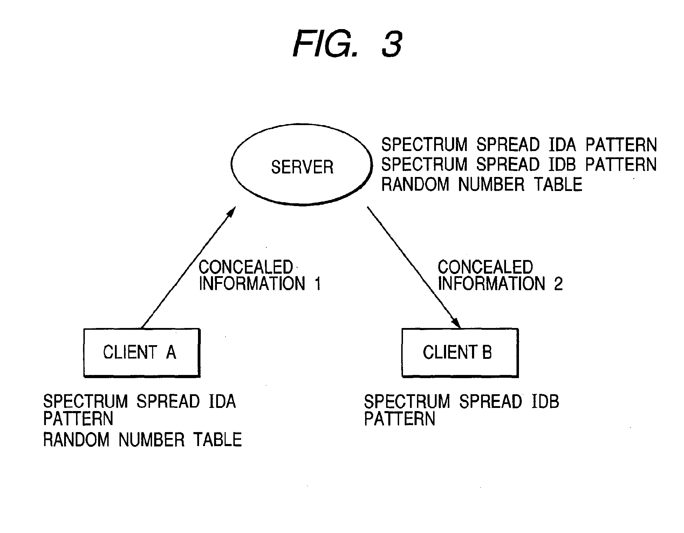

### System configuration (see Fig. 3)

A description will be made according to an example in which clients A and B are subscribed for this system managed by a server and concealed information is sent from the client A to the client B. A spread spectrum pattern ID_{A} and a spread spectrum pattern ID_{B} are given to the client A and the client B, respectively. In addition, a vector of a maximum numerical value sequence table of concealing processing is given to them, respectively. The server owns a maximum numerical value sequence table for performing phase modulation according to the spread spectrum patterns ID_{A} and ID_{B} for the clients A and Band a conversion vector for the client A. As described above, the client A applies exclusive OR processing to plane description information using the spread spectrum pattern ID_{A} to subject it to phase modulation with the maximum numerical value sequence table of FIG. 2, and further applies the exclusive OR processing to the plane description information using the spread spectrum pattern ID_{A} to send concealed information 1 to a server computer. The server can restore the concealed information 1 because it knows the spread spectrum pattern ID_{A} of the client A, the maximum numerical value sequence table for the client A, and an inverse conversion table thereof. Next, plane description information of the restored concealed information 1 is sent to the client B as concealed information 2 using the spread spectrum pattern ID_{B} of the client B and the maximum numerical value sequence tables for the client B. The client B can restore the concealed information 2 using the spread spectrum pattern ID_{B} and the inverse conversion table of the maximum numerical value sequence table for the client B.

The client A can select an arbitrary bit length (e.g., 4, 16, 64, 256, 1024, 4096, ...) for a block length (array length) of concealing processing as a parameter. In addition, the client A can determine which character string is allocated to which step of a slipping cylinder to generate a vector table according to various maximum numerical value sequence patterns. The parameters selected by the client A can be concealed and sent to the server computer, and the server can produce environmental data for concealing and restoration using the parameters sent by the client A.

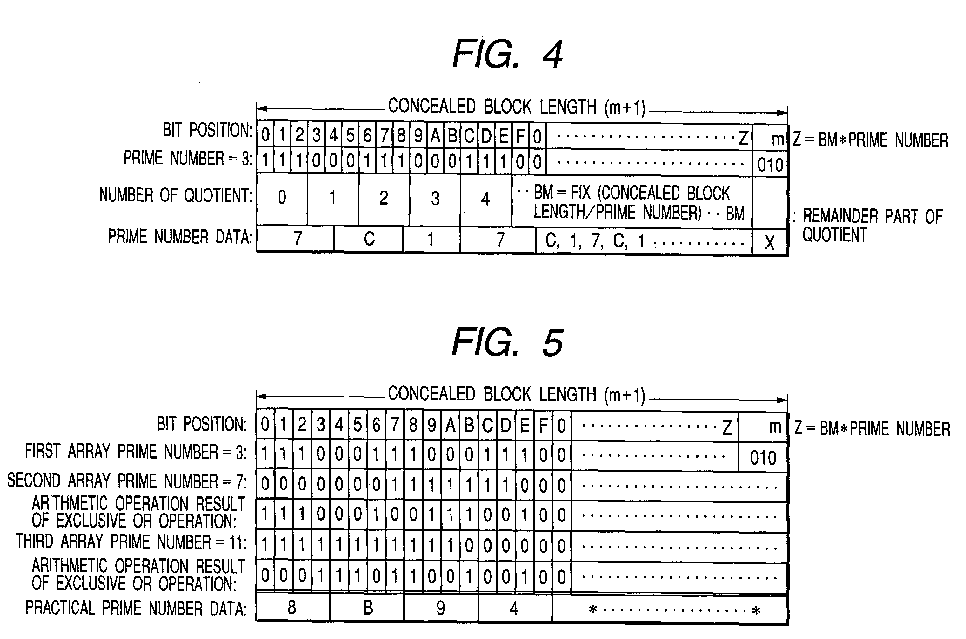

### Spectrum spread ID pattern (see FIGS. 4 and 5)

When an arbitrary signal (information) with a fixed time defined is repeatedly transferred, the fixed time is called a period. A time function owned by a transferred signal information) having such a period can be represented as a compound function (series) of 1/2, 1/3, 1/4, ... of the period with a sine function by a unit of the period as a basic wave. This representation conversion is mathematically called "Fourier transformation (integral series development concerning time)" and is generally used. Then, a result of the conversion, generated energy in respective frequencies is found with an inverse of the period as a basic frequency, an reciprocal of 1/2 of the period as a second higher harmonic, 1/2 of the period as a third higher harmonic, 1/4 of the period as a fourth higher harmonic, and the like. This is called spectrum conversion in the electronics and the communication engineering. A pattern (crest pattern) of a signal (information) is found by this conversion function to be an index of the signal analysis. In general, a person attacking concealed information is a person who advances work with this pattern as a key.

Therefore, the concealed block length (repeating period) is unilaterally set according to specifications of a "longest numerical value array generation mechanism", and the length is an integer value multiplier of four (surely an even number value). As described above, in a signal or information repeated temporally, information in a periodical relationship with repetition (periodicity) as a modulus absolutely has a discrete spectrum fixed at a multiple of a frequency which the modulus has. This is called a pattern (crest pattern) of information in the encryption technique.

Now, in order to prevent external decryption (secure stress against attack), a pattern in a first stage must be destroyed. In information synchronizing with a concealed block length repeating period) (block number divided by an integer), a spectrum (crest pattern) is generated surely as described above. In order to destroy this, if original information is modulated by sub-signa-(sub-information) asynchronous with the concealed block Length, the asynchronism (period which cannot be divided by an integer value) mobilizes the spectrum to conceal the crest pattern. That is, a decimal point part given by a result of division relates to a phase of a local spectrum to give fluctuation in a frequency period) direction of the local spectrum which is discretely fixed, and the fluctuation of the decimal point part value is observed like a sound maskec by a noise. Consequently, an observation result having a continuous spectrum in a frequency space as in white light is obtained. Therefore, occurrence of a pattern to be subjected to attack of concealed information from the outside is suppressed.

A used area as a value, which is absolute as sub-information for executing this principle, is a prime number array of bit patterns. The prime number referred to here is not a numerical value. It means that bit array data of continuous 1 or 0 is used with a prime number of 1/2 or less of the number of bits of the concealed block length of the original information as a maximum prime number. Then, 0, 1, or continuation of 1 and 0 is applied to a remainder part, which is obtained by deducting an integer part of a quotient found by dividing the concealed block length by one array length of the prime number from the concealed array length. Bit values of continuation of 1 or 0 of a given prime number K and continuation of 0 or 1 of the given prime number K are used for an even number value given by the quotient and an add number value, respectively. It is assumed that, as this data of prime number array which is the spread spectrum pattern shown in FIG. 1, an arbitrary plurality of arrays are used as a result of exclusive OR operation, respectively.

FIG. 4 shows the case in which the prime number value is three. In the case in which the prime number value is five, the number of 1 and 0 is five. X in FIG. 4 is indicated by a composition with a value (OM) of Zth bit includes including a remainder part. This prime number data is the above-described spread spectrum pattern. This prime number data is produced for each user. If X is composited by a plurality of prime number data, it is on condition that different types of prime number values are used for each prime number array. Therefore, the prime number data to be used for spectrum spreading is data in which a missing comb tooth state and a clogged state exist at random.

FIG. 5 shows an example of composition arithmetic operation of practical prime number array data (spread spectrum pattern) based upon prime numbers 3, 7, and 11. Here, array composition as a method of further increasing a concentration of spread of a spectrum will be described. A plurality of prime number arrays to be composited has values different from each other in prime numbers thereof. This is for the purpose of surely securing non-periodicity between the basic wave of the concealed block length and the prime number array spectrum. Here, a concentration of spread of a spectrum means making an interval of occurrence of a spectrum smaller. The smaller a spectrum interval becomes, a signal thereof becomes closer to a noise to eliminate a key for external decryption (characteristic pattern of information).

It is possible to use data of a result, which is given by sequentially applying the exclusive OR operation to a plurality of prime numbers excluding one or identical numerical values, as a prime number array (spread spectrum pattern) on a bit configuration. There is no restriction for respective prime numbers to be selected at all. In addition, there is no restriction for prime numbers to be served for arithmetic operation of each layer at all except one condition that an identical numerical value is not used among the layers. Further, it is also possible to use a bit of a remainder to be allocated to a bit length of a standardized concealed block as a phase position concerning the above-described arrangement of the prime number pattern.

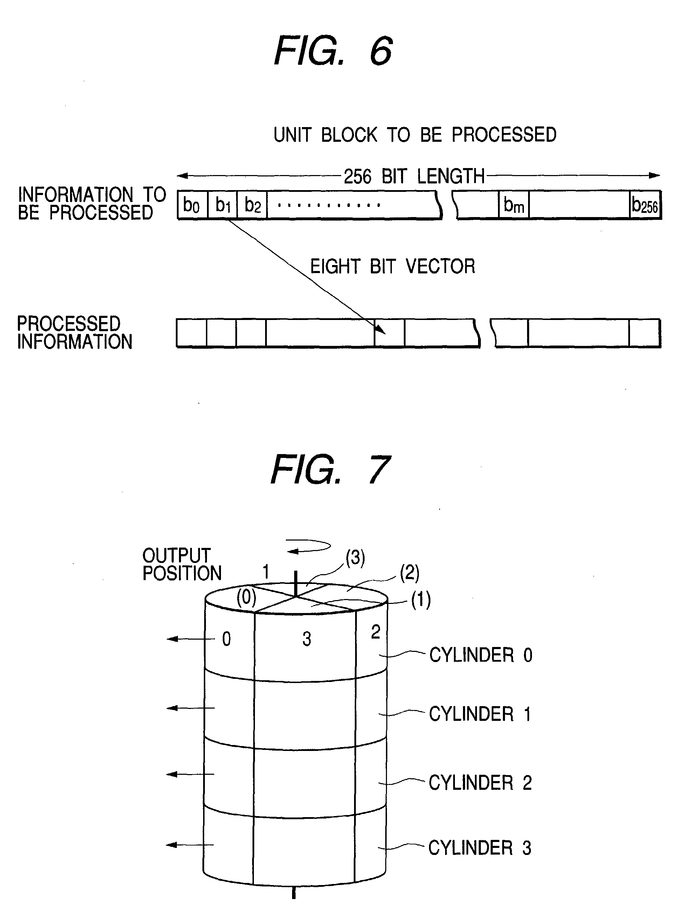

### Pseudo-random vector for phase conversion (see FIGS. 6 to 9)

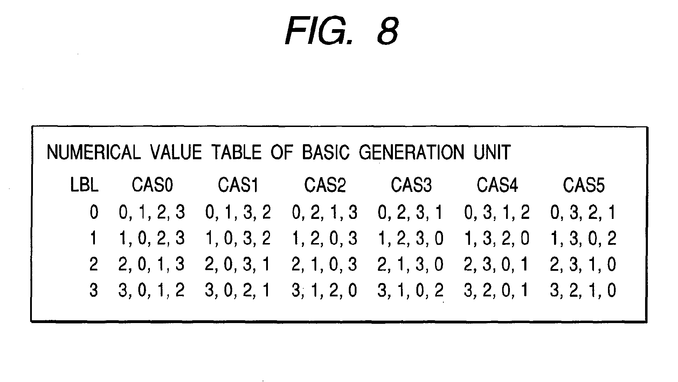

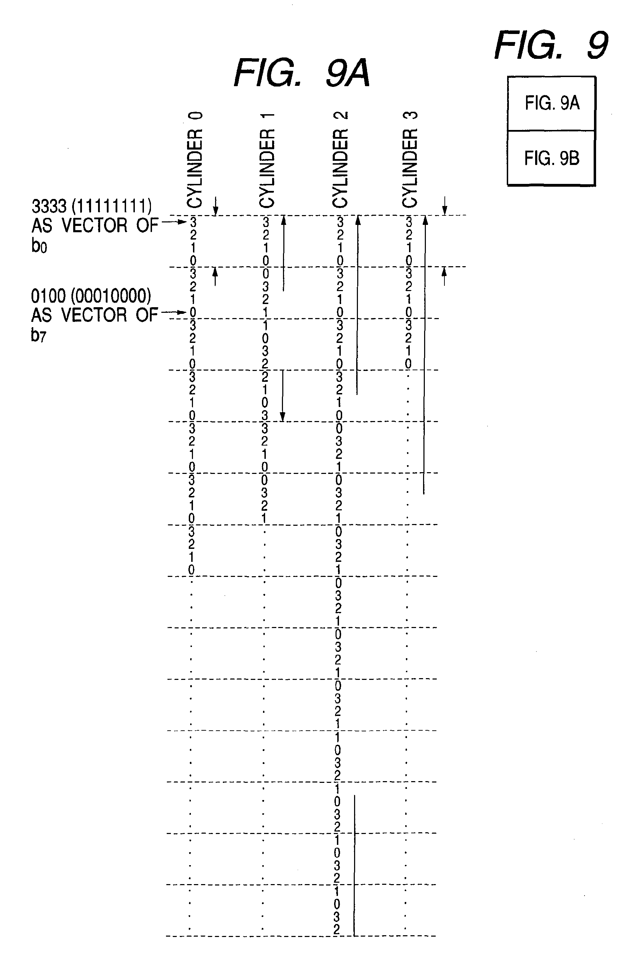

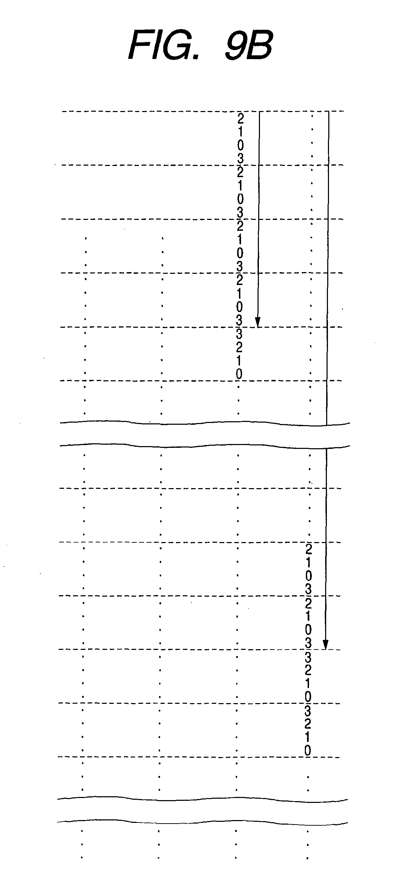

A vector table of a maximum numerical value sequence form, which is used for phase conversion processing for converting the processed information 1 into the processed information 2 in FIG. 1, will be described with reference to FIGS. 6 to 9A and 9B. As an example, as shown in FIG. 6, the case in which a 256 bit length of information to be processed is processed as one block will be considered. A vector for converting each bit of a 256 bit length block of the information to be processed into a bit position in processed information is an eight bit vector. In the embodiments of the present invention, this conversion vector is generated in a concept of a slipping cylinder. FIG. 7 shows the concept of generation of the above-described conversion vector (maximum numerical value array) according to a slipping cylinder. Illustratively, the slipping cylinder consists of cylinders 0 to 3 in four steps, and each cylinder is divided into four sections of (0) to (3) and one numerical values of 0 to 3 is allocated to one section. When it is assumed that, for example, numerical values "1", "3", "0", and "1" are outputted from the cylinders 0, 1, 2, and 3, respectively, in output positions of the cylinders, this means that a numerical value string 1301, that is, an eight bit vector of 01110001 is outputted.

The cylinders 0 to 3 rotate and output numerical value allocated to the respective sections sequentially from the output positions. However, the cylinder 0 continues to rotate as it is without slipping and outputs a numerical value in the output position, the cylinder 1 slips by one section for each rotation of the cylinder 0, the cylinder 2 slips by the section for each four rotations of the cylinder 0, and the cylinder 3 slips by one section for each sixteen rotations of the cylinder 0 (in all, for each rotation of the cylinders in pre-steps). For illustration, FIGS. 9A and 9B show a state of an output vector from the slipping cylinder in the case in which a same numerical value array 3, 2, 1, and 0 is allocated to the sections (0) to (3) of the respective cylinders 0 to 3. The cylinder 0 sequentially outputs a sequence of 3, 2, 1, and 0 for each rotation consistently. The cylinder 1 outputs the sequence of 3, 2, 1, and 0 in a first one rotation but, since it slips by one section after the one rotation, outputs a sequence of 0, 3, 2, and 1 in a second rotation, outputs a sequence of 1, 0, 3, and 2 in a third rotation, and outputs a sequence of 2, 1, 0, and 3, and makes one cycle with four rotations to return to the original sequence 3, 2, 1, and 0 in a fifth rotation. The cylinder 2 slips by one section for each four rotations and makes one cycle with sixteen rotations to return to the original sequence 3, 2, 1, and 0 in a seventeenth rotation. The cylinder 3 slips by one section for each sixteen rotations and makes one cycle with sixty four rotations to return to the original sequence 3, 2, 1, and 0 in a sixty-fifth rotation. With such a configuration, an eight bit vector numerical value is outputted from each section in each four rotations of the cylinder 1 in outputs from the respective cylinders 0 to 3.

The cylinders are operated as described above and return to the initial state in 256 steps. Therefore, a numerical value of a maximum numerical value sequence of 0 to 255 (hexadecimal representation OFF) is generated.

Four numerical value arrays allocated to each section of the cylinders 0 to 3 are selected from a table of FIG. 8. This table lists all possibilities of arrays of the numerical values 0, 1, 2, and 3. It is possible to allocate, for example, 2, 0, 1, and 3 to the cylinder 0 and allocate another numerical value array to other cylinders. A peculiar conversion vector is generated according to the allocation of sequences. That is, a pseudo-random conversion vector peculiar to a user is generated by allocation of a sequence for each user. It goes without saying that the slipping cylinder is not configured mechanically but is configured in the manner of software. This can be called phase modulation because each bit of information to be processed b₀ to b₂₅₅ is arranged in different positions of processed information. In addition, the number of steps, the number of sections, and timing of slipping of the slipping cylinder are selected appropriately according to design.

The maximum numerical value sequence generation mechanism according to the slipping cylinder is described above as a mechanism capable of generating a numerical value string without an identical numerical value ) of a maximum value (maximum numerical value) which can be represented by 0 to an aggregate number of bits thereof. That is, in this generation, a simple arithmetical series such as 0, 1, ... m (maximum numerical value), a compound arithmetical series of arithmetical series, and other series may be generated. A numerical value string of a mathematically defined series state is not called a random number. In the present invention, there is no absolute restriction for being a random number and, therefore, it is possible to use all numerical value strings (vector tables) according to this generation mechanism.

In order to establish the maximum numerical value sequence generation mechanism using the slipping cylinder, a block length, selection of numerical value conditions of each unit, conditions for operation of each unit, and an initial value for operation are adopted as specifications and conditions based upon the specifications at the implementation stage of the present invention. The block length is an even number by a unit of bit, conditions for operation of each unit is selected from LBL/CAS of the table of FIG. 8, and addition or subtraction of one with respect to each unit is selected as a slip direction. The initial value for operation is produced based upon a group ID (identification information) with respect to a value found by multiplying the number of units by two (complying with implementation specifications). An output from the generation mechanism is determined for bits thereof with respect to specifications as a vector value, and weight to be given to each bit is also determined according to specifications at the time of implementation. This means that this is executed as final adjustment processing with an object of eliminating differential correlation with respect to vector data.

The above-described processing method of the present invention is realized as a computer program, and the program is loaded to a recording medium.

## Claims

1. A concealed information producing method comprising the steps of:
preparing information to be processed;
diffusing (jamming) the information to be processed with a spread spectrum pattern; and
applying phase modulation to (hopping) the information to be processed subjected to spectrum spreading to produce concealing processing information.

2. The concealed information producing method according to claim 1,
wherein the exclusive OR operation of the information to be processed and the spread spectrum pattern is executed, whereby a characterizing spectrum (crest pattern) of the information to be processed is spread.

3. The concealed information producing method according to claim 1 or 2,
wherein the information to be processed subjected to the phase modulation is further spread with the spread spectrum pattern to produce concealed processing information.

4. The concealed information producing method according to any one of claims 1 to 3,
wherein the spread spectrum pattern is prime number array data based upon a given prime number.

5. The concealed information preparation method according to any one of claims 1 to 4,
wherein a conversion vector used for the phase modulation is generated by a slipping cylinder.

6. A recording medium, having loaded therein the method according to any one of claims 1 to 5 as a temperature program.
